# EUROPEAN PATENT SPECIFICATION

(11) **EP 4 241 962 B1**
(45) Date of publication and mention of the grant of the patent: **25.06.2025**
(21) Application number: 21889558.9
(22) Date of filing: 03.11.2021
(51) Int. Cl.: B29C 51/08, H01M 10/04, B29C 51/20, B29C 51/26, H01M 50/10, B29C 51/30, B29C 51/38, H01M 50/11, B29L 31/00

(54) **SECONDARY BATTERY POUCH MANUFACTURING DEVICE AND SECONDARY BATTERY POUCH MANUFACTURED THEREBY**
VORRICHTUNG ZUR HERSTELLUNG EINES SEKUNDÄRBATTERIEBEUTELS UND DAMIT HERGESTELLTER SEKUNDÄRBATTERIEBEUTEL
DISPOSITIF DE FABRICATION DE POCHE DE BATTERIE SECONDAIRE ET POCHE DE BATTERIE SECONDAIRE FABRIQUÉE PAR CELUI-CI

(30) Priority: 04.11.2020 KR 20200146226
(43) Date of publication of application: 13.09.2023
(73) Proprietor: LG Energy Solution, Ltd., Seoul 07335 (KR)
(72) Inventor: LEE, Chung Hee, Daejeon 34122 (KR); OH, Se Young, Daejeon 34122 (KR); KIM, Geun Hee, Daejeon 34122 (KR)
(74) Representative: Goddar, Heinz J.
(86) International application number: PCT/KR2021/015813
(87) International publication number: WO 2022/098093

(56) References cited:
- KR-A- 20130 133 585
- KR-A- 20130 133 585
- KR-A- 20170 022 156
- KR-A- 20170 022 156
- KR-A- 20190 090 153
- KR-A- 20190 092 017
- KR-A- 20190 092 017
- KR-A- 20190 106 473
- KR-A- 20190 106 473
- KR-A- 20200 098 172
- KR-A- 20200 117 177
- KR-A- 20200 117 177

## Description

### CROSS-REFERENCE TO RELATED APPLICATION

### TECHNICAL FIELD

The present invention relates to an apparatus for manufacturing a pouch of a secondary battery and a pouch of a secondary battery, which is manufactured by the apparatus, and more particularly, to an apparatus for manufacturing a pouch of a secondary battery, in which, when the pouch having two cup parts is molded, the pouch is molded by relieving a pressure applied to a pouch bridge that is a narrow connection part between the two cup parts to improve quality of a finally molded pouch product, and a pouch of a secondary battery manufactured by the method.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

In particular, in terms of materials, there is a high demand for lithium secondary batteries such as lithium ion batteries and lithium ion polymer batteries having advantages such as high energy density, discharge voltage, and output stability.

The secondary batteries are classified into cylindrical batteries and prismatic batteries, in which an electrode assembly is embedded in a cylindrical or prismatic metal can, and pouch-type batteries, in which an electrode assembly is embedded in a pouch-type case made of an aluminum laminate sheet according to shapes of battery cases.

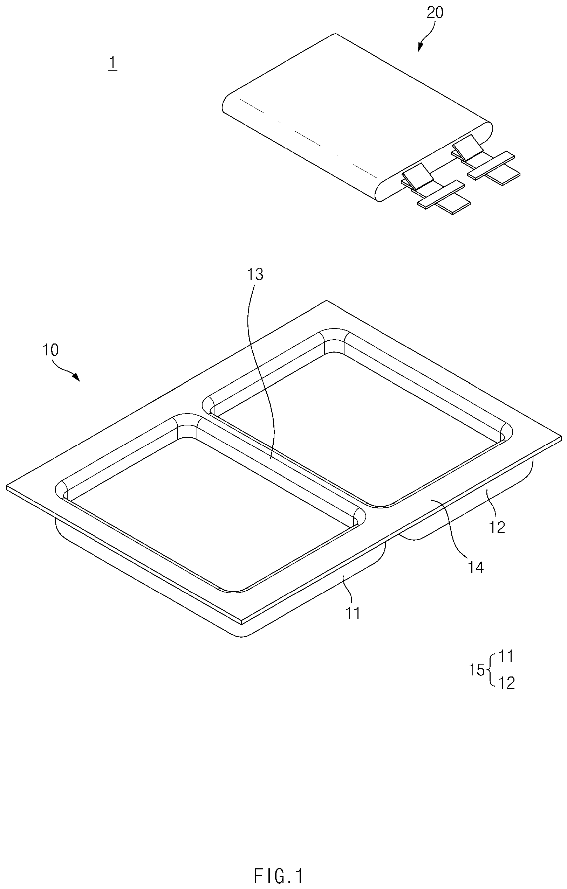

FIG. 1 illustrates an example of a pouch-type secondary battery. In detail, FIG. 1 is an exploded perspective view of a pouch of a secondary battery and an electrode assembly, which is embedded in the pouch.

A pouch-type secondary battery 1 includes an electrode assembly 20, in which electrodes and separators are alternately stacked, and a pouch 10, into which the electrode assembly is inserted. In addition, the pouch includes cup parts 11 and 12 of the pouch, each of which has a recessed shape so that the electrode assembly is directly accommodated. The cup parts of the pouch are provided with the left cup part 11 and the right cup part 12 to surround the electrode assembly at both sides thereof. A peripheral part 14 of the pouch is formed around the periphery of each of the cup parts of the pouch to seal the pouch from the outside.

The pouch illustrated in FIG. 1 shows a pouch 10, in which two cup parts are formed on a flat pouch surface. The pouch having the above-described shape may be manufactured through an apparatus for manufacturing the pouch of the secondary battery, which is formed as a molding die.

In the secondary battery, as a width of the pouch bridge portion, which is a connection part of the left cup part and the right cup part, is reduced, a space loss in a battery pack may be reduced. Therefore, the need to reduce the width of the pouch bridge portion is high. However, as the width of the pouch bridge portion decreases, the pressure applied to the pouch bridge molding part increases, and thus, there is a problem in that probability of occurrence of cracks on a pouch surface of the pouch bridge increases. Therefore, there is a problem in that the cracks have to be prevented from occurring while reducing the width of the pouch bridge.

The prior art relevant to the present invention is given by KR 2020 0117177 A, KR 2019 0106473 A, KR 2017 0022156 A, KR 2019 0092017 A, KR 2013 0133585 A, KR 2020 0098172 A, and US 2019/229301 A1.

KR 2020 0117177 A describes a manufacturing device to reduce the overall cycle time by simplifying processes and to improve cooling efficiency through the reduction of the sealing surface in the manufacture of external materials for secondary battery pouches.

KR 2019 0106473 A describes a pouch designed for secondary battery featuring symmetrical left and right upper accommodation grooves, each with an open configuration. The pouch also incorporates a bridge that connects these accommodation grooves, protruding upwards from the bottom surface of each groove and boasting a rounded curvature formed at the top.

KR 2017 0022156 A describes a pouch for secondary batteries, which compensates for thickness considering the bridge part, thereby suppressing an increase in the thickness of the can.

KR 2019 0092017 A describes a pouch forming apparatus for a secondary battery, which shows a die, a punch, a stripper, and a partition wall. The die is equipped with an accommodation groove to shape the pouch's cup section on a base surface, where the pouch is positioned. To mold the cup part of the pouch, the punch is inserted into the accommodation groove of the die. The stripper is provided to press the peripheral part of the pouch, situated around the area intended to be shaped into the cup section of the pouch by the punch. The die features two accommodation grooves, comprising a left accommodation groove and a right accommodation groove. Between the left accommodation groove and the right accommodation groove, there is the partition wall designed to link them together. The partition wall includes a pillar section with straight lateral sides and a curved top portion at its upper end in a cross-sectional view.

KR 2013 0133585 A describes a pouch type secondary battery having improved heat dissipating performance.

KR 2020 0098172 A describes a pouch forming apparatus for a secondary battery, which shows a die unit, a pressing portion, a pressing unit, and a diaphragm. The die unit is equipped with a molding groove to shape the pouch's cup section on a base surface, where the pouch is positioned. To mold the cup part of the pouch, the pressing portion is inserted into the molding groove of the die unit. The pressing unit is provided to press the peripheral part of the pouch, situated around the area intended to be shaped into the cup section of the pouch by the pressing portion. The die unit features two molding grooves, comprising a left molding groove and a right molding groove. Between the left molding groove and the right molding groove, there is the diaphragm designed to link them together.

US 2019/229301 A1 describes a mold die for forming a pouch for secondary batteries, which minimizes a folding area of a bridge folding area of the pouch by folding two accommodation parts together.

### DISCLOSURE OF THE INVENTION

### TECHNICAL PROBLEM

The present invention has been devised to solve the above problems, and an object of the present invention is to provide an apparatus for manufacturing a pouch of a secondary battery, in which, when the pouch having two cup parts is molded, the pouch is molded by relieving a pressure applied to a pouch bridge that is a narrow connection part between the two cup parts to improve quality of a finally molded pouch product. In addition, an object of the present invention is to provide a pouch of a secondary battery manufactured by the apparatus for manufacturing the pouch of the secondary battery.

### TECHNICAL SOLUTION

The present invention is defined by the features of the appended independent claims. Particular embodiments are given according to the dependent claims.

An apparatus for manufacturing a pouch of a secondary battery includes: a lower die having an accommodation groove for molding a cup part of the pouch in a base surface, on which the pouch is disposed; a punch inserted into the accommodation groove of the lower die to mold the cup part of the pouch; and a stripper provided to press a peripheral part of the pouch, which is disposed around a portion to be molded as the cup part of the pouch by the punch, wherein two accommodation grooves provided with a left accommodation groove and a right accommodation groove are formed in the lower die, a bridge part configured to connect the two accommodation grooves to each other is formed between the left accommodation groove and the right accommodation groove, the bridge part includes a pillar portion of which lateral sides are formed as two straight lines and a top portion formed as a curve on an upper end of the pillar portion, based on a cross-sectional view, and a height (h) of the top portion, which is measured at an upper end of the pillar portion, is less than 1/2 of a width (W) of the pillar portion.

The height (h) of the top portion, which is measured at the upper end of the pillar portion, may be greater than 1/10 of the width (W) of the pillar portion.

The width (W) of the pillar portion may range of 0.9 mm to 1.1 mm, and the height (h) of the top portion may range of 0.09 mm to 0.55 mm.

The width (W) of the pillar portion may range of 0.9 mm to 1.1 mm, and the height (h) of the top portion may range of 0.2 mm to 0.4 mm.

The curve of the top portion may have a shape forming a portion of an oval.

A top point that is the highest point of the top portion may be disposed on a center line (L) that is a virtual straight line crossing a center of the pillar portion.

The top portion may have a horizontally symmetrical shape with respect to the center line (L).

A cross-sectional shape of the top portion may be uniform in a longitudinal direction (Y) of the bridge part.

A pouch of a secondary battery includes: a cup part of the pouch, which is provided with two left and right cup parts; and a peripheral part of the pouch, which extends outward from an upper end of each of the left cup part and the right cup part; and a pouch bridge configured to connect the left cup part to the right cup part, wherein the bridge part includes a pouch pillar of which lateral sides are formed as two straight lines and a pouch top formed as a curve on an upper end of the pouch pillar, based on a cross-sectional view, and a height (h) of the pouch top, which is measured at an upper end of the pouch pillar, is less than 1/2 of a width (W) of the pouch pillar.

The height (h) of the pouch top, which is measured at the upper end of the pouch pillar, may be greater than 1/10 of the width (W) of the pouch pillar.

### ADVANTAGEOUS EFFECTS

The apparatus for manufacturing the pouch of the secondary battery may include the lower die having the accommodation groove for molding the cup part of the pouch in the base surface, on which the pouch is disposed, the punch inserted into the accommodation groove of the lower die to mold the cup part of the pouch, and the stripper provided to press the peripheral part of the pouch, which is disposed around the portion to be molded as the cup part of the pouch by the punch, wherein the two accommodation grooves provided with the left accommodation groove and the right accommodation groove are formed in the lower die, the bridge part configured to connect the two accommodation grooves to each other is formed between the left accommodation groove and the right accommodation groove, the bridge part includes the pillar portion of which the lateral sides are formed as the two straight lines and the top portion formed as the curve on the upper end of the pillar portion, based on the cross-sectional view, and the height (h) of the top portion, which is measured at the upper end of the pillar portion, is less than 1/2 of the width (W) of the pillar portion. Therefore, when the pouch having two cup parts is molded, the pouch is molded by relieving the pressure applied to the pouch bridge that is the narrow connection part between the two cup parts to improve the quality of the finally molded pouch product. In addition, the pouch of the secondary battery, which has excellent quality, may be manufactured by the apparatus.

### BRIEF DESCRIPTION OF THE DRAWINGS

FIG. 1 is an exploded perspective view of a pouch of a secondary battery and an electrode assembly, which is embedded in the pouch.
FIG. 2 is a perspective view of an apparatus for manufacturing a pouch of a secondary battery according to Embodiment 1 of the present invention.
FIG. 3(a) is a plan view of a lower die in the apparatus for manufacturing the pouch of the secondary battery according to Embodiment 1 of the present invention when viewed from the top.
FIG. 3(b) is a cross-sectional view taken along line I-I' of FIG. 3(a).
FIG. 4 is an enlarged view illustrating a portion S of FIG. 3(b).
FIG. 5 is a partial cross-sectional view illustrating a pouch bridge portion of the pouch of the secondary battery in the apparatus for manufacturing the pouch of the secondary battery according to Embodiment 1 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

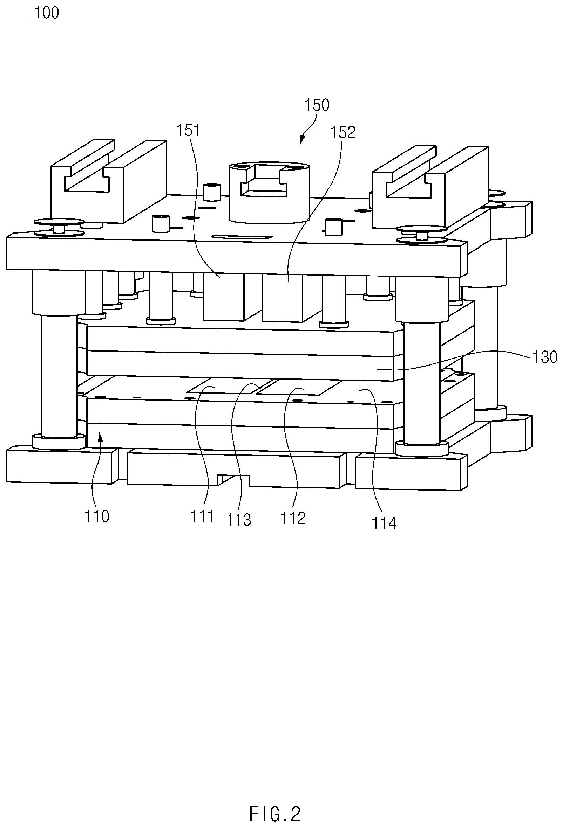

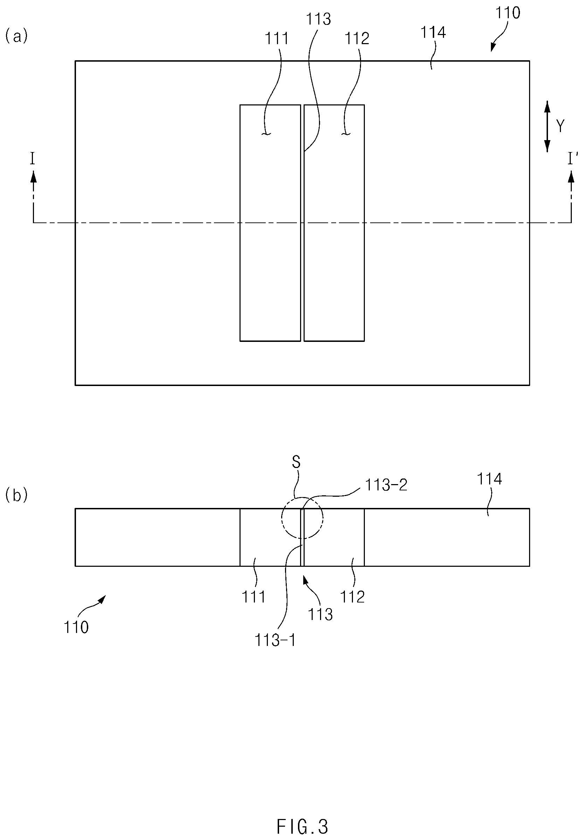

FIG. 2 is a perspective view of an apparatus for manufacturing a pouch of a secondary battery according to Embodiment 1 of the present invention. FIG. 3(a) is a plan view of a lower die in the apparatus for manufacturing the pouch of the secondary battery according to Embodiment 1 of the present invention when viewed from the top.

Referring to FIGS. 2 to 3(a), an apparatus 100 for manufacturing a pouch of a secondary battery according to Embodiment 1 of the present invention includes a lower die 110, a punch 150, and a stripper 130.

The lower die 110 may be disposed below to mold the pouch and may have a base surface 114, on which the pouch is disposed, on an upper portion thereof. In addition, the lower die 110 has accommodation grooves 111 and 112 for molding cup parts 11 and 12 of the pouch on the base surface 114 on which the pouch is disposed. The punch 150 may be configured to mold the cup parts 11 and 12 of the pouch while being inserted into the accommodation grooves of the lower die 110. The stripper 130 may be configured to press a peripheral part 14 of the pouch, which is disposed in the periphery of a portion to be molded into the cup part of the pouch, from an upper side by the punch 150. For this, the stripper 130 may be disposed above a lower die 110 to face the lower die 110.

The stripper 130 and the lower die 110 may press and grip upper and lower portion of the peripheral part 14 of the pouch, respectively, and in the state in which the peripheral part 14 of the pouch is gripped by the stripper 130 and the lower die 110, the punch 150 may be inserted into the accommodation grooves to mold the cup part of the pouch.

Two accommodation grooves, i.e., a left accommodation groove 111 and a right accommodation groove 112 may be formed in the lower die 110. The left cup part 11 may be formed through the left accommodation groove 111, and the right cup part 12 may be formed through the right accommodation groove 112. A bridge part 113 connecting the two accommodation grooves to each other may be formed between the left accommodation groove 111 and the right accommodation groove 112.

Two accommodation grooves, i.e., a left accommodation groove 111 and a right accommodation groove 112 may be formed in the lower die 110, and thus, the punch 150 may include a left punch 151 inserted into the left accommodation groove 111 and a right punch 152 inserted into the right accommodation groove 112.

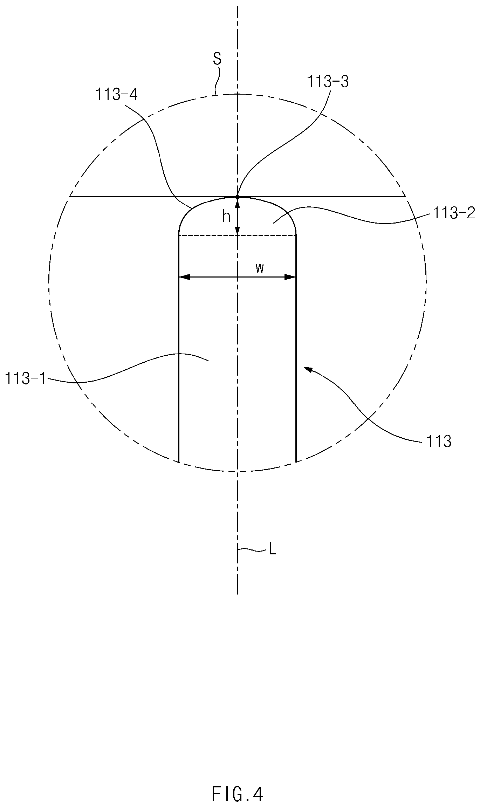

FIG. 3(b) is a cross-sectional view taken along line I-I' of FIG. 3(a). FIG. 4 is an enlarged view illustrating a portion S of FIG. 3(b).

Referring to FIGS. 3(a), 3(b), and 4, in the apparatus for manufacturing the pouch of the secondary battery according to Embodiment 1 of the present invention, the bridge part may include a pillar portion of which lateral sides are formed as two straight lines and a top portion formed as a curve on an upper end of the pillar portion. Here, a height h of the top portion measured from the upper end of the pillar portion may have a value less than 1/2 of a width W of the pillar portion.

When the height h of the top portion has a value less than 1/2 of the width W of the pillar portion, the upper end of the bridge part is formed gently enough. Thus, when the pouch having the two cup parts are molded, the pouch may be molded by relieving a pressure applied to the pouch bridge that is the connection part, in which a width between the two cup parts is narrowed. Thus, quality of a finally molded pouch product may be improved.

When the height h of the top portion is greater than 1/2 of the width W of the pillar portion, since the pressure applied to the pouch bridge increases, there is a problem in that cracks or whitening may occur in the surface of the pouch at the pouch bridge portion.

In addition, in the apparatus for manufacturing the pouch of the secondary battery according to Embodiment 1 of the present invention, the height h of the top portion, which is measured at the upper end of the pillar portion may be greater than 1/10 of the width W of the pillar portion.

When the height h of the top portion is less than 1/10 of the width W of the pillar portion, since the top portion has a shape to be close to a plane, a problem in which both ends of the pouch bridge are excessively bent may occur. In addition, in the manufacturing of the lower die so that the top portion has a shape close to the plane, there is a problem in that it is difficult to manufacture the lower die itself.

In the apparatus for manufacturing the pouch of the secondary battery according to Embodiment 1 of the present invention, specifically, the width W of the pillar portion may be 0.9 mm to 1.1 mm, and the height h of the top portion may be 0.09 mm to 0.55 mm.

That is, since a minimum value of the height h of the top portion corresponds to 1/10 of the width W of the pillar portion, the minimum value may be 0.09 mm that corresponds to 1/10 of 0.9 mm. Since the minimum value of the height h of the top portion corresponds to 1/2 of the width W of the pillar portion, the minimum value may be 0.55mm that corresponds to 1/2 value of 1.1 mm.

More preferably, when the width W of the pillar portion is 0.9 mm to 1.1 mm, the height h of the top portion may be 0.2 mm to 0.4 mm. When the width W of the pillar portion is 0.9 mm to 1.1 mm, if the height h of the top portion has a value of 0.2 mm ~ 0.4 mm, an excellent pouch product that is capable of maximizing ease of manufacturing the lower die and efficiency of the space inside the battery without the cracks.

Referring to FIG. 4, the curved space of the top portion may be a space forming a portion of an oval. Also, a top point, which is the highest point of the top portion, may be disposed on a center line L, which is a virtual straight line crossing a center of the pillar portion. Here, the top portion may have a horizontally symmetrical shape with respect to the center line L.

When the top portion is formed in this shape, the most stable pouch molding may be possible, and the pouch having the excellent quality may be realized without an occurrence of fine wrinkles on the surface of the pouch.

The cross-sectional shape of the top portion illustrated in FIG. 4 may be uniform in a longitudinal direction Y of the bridge part (see FIG. 3(a)). Thus, a balanced secondary battery may be manufactured.

### Embodiment 2

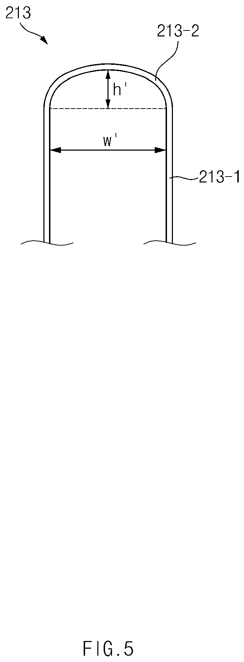

FIG. 5 is a partial cross-sectional view illustrating a pouch bridge portion of the pouch of the secondary battery in the apparatus for manufacturing the pouch of the secondary battery according to Embodiment 1 of the present invention.

Embodiment 2 of the present invention relates to a pouch of a secondary battery, which is manufactured by the apparatus for manufacturing the pouch of the secondary battery according to Embodiment 1 of the present invention.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

The pouch of the secondary battery according to Embodiment 2 of the present invention includes a cup part of the pouch, which is provided with two left and right cup parts, a peripheral part of the pouch, which extends outward from an upper end of each of the left cup part and the right cup part, and a pouch bridge connecting the left cup part to the right cup part.

Referring to FIG. 5, the pouch bridge may include a pouch pillar of which lateral sides are formed as two straight lines, and a pouch top formed in a curve at an upper end of the pouch pillar, based on a cross-sectional view.

In addition, a height h' of the pouch top, which is measured from the upper end of the pouch pillar, may have a value less than 1/2 of a width W' of the pouch pillar.

This may be in the form of the pouch bridge formed by the lower die bridge part of the apparatus for manufacturing the pouch of the secondary battery according to Embodiment 1 of the present invention, which is illustrated in FIG. 4.

In the pouch of the secondary battery according to Embodiment 2 of the present invention, since the height h of the top portion is formed to be less than 1/2 of the width W of the pillar portion, cracks or whitening may not occur on the pouch surface of the pouch bridge portion to realize the excellent quality.

Also, in the pouch of the secondary battery according to Embodiment 2 of the present invention, the height h' of the pouch top, which is measured from the upper end of the pouch pillar, may be a value greater than 1/10 of the width W' of the pouch pillar.

In this case, a problem in which both ends of the pouch bridge are excessively bent may not occur to manufacture the pouch of the secondary battery, which has the excellent quality.

### [Description of the Symbols]

1: Secondary battery
10: Pouch
11: Left cup part
12: Right cup part
13: Pouch bridge
14: Peripheral part of pouch
15: Cup part of pouch
20: Electrode assembly
100: Apparatus for manufacturing pouch of secondary battery
110: Lower die
111: Left accommodation groove
112: Right accommodation groove
113: Bridge part
113-1: Pillar portion
113-2: Top portion
113-3: Top point
113-4: Curve of top portion
114: Base surface
130: Stripper
150: Punch
151: Left punch
152: Right punch
213: Pouch bridge
213-1: Pouch pillar
213-2: Pouch top

## Claims

1. An apparatus (100) for manufacturing a pouch (10) of a secondary battery (1), the
apparatus comprising:
a lower die (110) having an accommodation groove for molding a cup part of the pouch (15) in a base surface (114), on which the pouch (10) is disposed;
a punch (150) inserted into the accommodation groove of the lower die (110) to mold the cup part of the pouch (15); and
a stripper (130) provided to press a peripheral part of the pouch (14), which is disposed around a portion to be molded as the cup part of the pouch (15) by the punch (150),
wherein two accommodation grooves provided with a left accommodation groove (111) and a right accommodation groove (112) are formed in the lower die (110),
a bridge part (113) configured to connect the two accommodation grooves to each other is formed between the left accommodation groove (111) and the right accommodation groove (112),
the bridge part (113) comprises a pillar portion (113-1) of which lateral sides are formed as two straight lines and a top portion (113-2) formed as a curve on an upper end of the pillar portion (113-1), based on a cross-sectional view,
the apparatus being **characterized in that**
a height (h) of the top portion (113-2), which is measured at an upper end of the pillar portion (113-1), is less than 1/2 of a width (W) of the pillar portion (113-1).

2. The apparatus of claim 1, wherein the height (h) of the top portion (113-2), which is measured at the upper end of the pillar portion (113-1), is greater than 1/10 of the width (W) of the pillar portion (113-1).

3. The apparatus of claim 2, wherein the width (W) of the pillar portion (113-1) ranges of 0.9 mm to 1.1 mm, and
the height (h) of the top portion (113-2) ranges of 0.09 mm to 0.55 mm.

4. The apparatus of claim 2, wherein the width (W) of the pillar portion (113-1) ranges of 0.9 mm to 1.1 mm, and
the height (h) of the top portion (113-2) ranges of 0.2 mm to 0.4 mm.

5. The apparatus of claim 1, wherein the curve of the top portion (113-4) has a shape forming a portion of an oval.

6. The apparatus of claim 1, wherein a top point (113-3) that is the highest point of the top portion (113-2) is disposed on a center line (L) that is a virtual straight line crossing a center of the pillar portion (113-1).

7. The apparatus of claim 6, wherein the top portion (113-2) has a horizontally symmetrical shape with respect to the center line (L).

8. The apparatus of claim 1, wherein a cross-sectional shape of the top portion (113-2) is uniform in a longitudinal direction (Y) of the bridge part (113).

9. A pouch (10) of a secondary battery (1), the pouch (10) comprising:
a cup part of the pouch (15), which is provided with two left and right cup parts (11, 12); and
a peripheral part of the pouch (14), which extends outward from an upper end of each of the left cup part (11) and the right cup part (12); and
a pouch bridge (13; 213) configured to connect the left cup part (11) to the right cup part (12),
wherein the bridge part (113) comprises a pouch pillar (213-1) of which lateral sides are formed as two straight lines and a pouch top (213-2) formed as a curve on an upper end of the pouch pillar (213-1), based on a cross-sectional view,
the pouch being **characterized in that**
a height (h) of the pouch top (213-2), which is measured at an upper end of the pouch pillar (213-1), is less than 1/2 of a width (W) of the pouch pillar (213-1).

10. The pouch (10) of claim 9, wherein the height (h) of the pouch top (213-2), which is measured at the upper end of the pouch pillar (213-1), is greater than 1/10 of the width (W) of the pouch pillar (213-1).

## Patentansprüche

1. Vorrichtung (100) zum Herstellen eines Pouch (10) einer Sekundärbatterie (1), wobei die Vorrichtung umfasst:
ein unteres Formwerkzeug (110) aufweisend eine Aufnahmenut zum Formen eines Schalenteils des Pouch (15) in einer Basisfläche (114), auf der der Pouch (10) angeordnet ist;
einen Stempel (150), der in die Aufnahmenut des unteren Formwerkzeugs (110) eingesetzt ist, um den Schalenteil des Pouch (15) zu formen; und
einen Abstreifer (130), der vorgesehen ist, um einen Umfangsteil des Pouch (14) zu pressen, der um einen Abschnitt angeordnet ist, der als der Schalenteil des Pouch (15) durch den Stempel (150) geformt werden soll,
wobei zwei Aufnahmenuten, die mit einer linken Aufnahmenut (111) und einer rechten Aufnahmenut (112) versehen sind, in dem unteren Formwerkzeug (110) ausgebildet sind,
ein Brückenteil (113), das konfiguriert ist, um die zwei Aufnahmenuten miteinander zu verbinden, zwischen der linken Aufnahmenut (111) und der rechten Aufnahmenut (112) ausgebildet ist,
das Brückenteil (113) einen Säulenabschnitt (113-1) umfasst, dessen laterale Seiten als zwei gerade Linien ausgebildet sind, und einen oberen Abschnitt (113-2), der als eine Kurve an einem oberen Ende des Säulenabschnitts (113-1) ausgebildet ist, basierend auf einer Querschnittsansicht, wobei die Vorrichtung **dadurch gekennzeichnet ist, dass**
eine Höhe (h) des oberen Abschnitts (113-2), die an einem oberen Ende des Säulenabschnitts (113-1) gemessen wird, kleiner als 1/2 einer Breite (W) des Säulenabschnitts (113-1) ist.

2. Vorrichtung nach Anspruch 1, wobei die Höhe (h) des oberen Abschnitts (113-2), die an dem oberen Ende des Säulenabschnitts (113-1) gemessen wird, größer als 1/10 der Breite (W) des Säulenabschnitts (113-1) ist.

3. Vorrichtung nach Anspruch 2, wobei die Breite (W) des Säulenabschnitts (113-1) in einem Bereich von 0,9 mm bis 1,1 mm liegt, und
die Höhe (h) des oberen Abschnitts (113-2) in einem Bereich von 0,09 mm bis 0,55 mm liegt.

4. Vorrichtung nach Anspruch 2, wobei die Breite (W) des Säulenabschnitts (113-1) in einem Bereich von 0,9 mm bis 1,1 mm liegt, und
die Höhe (h) des oberen Abschnitts (113-2) in einem Bereich von 0,2 mm bis 0,4 mm liegt.

5. Vorrichtung nach Anspruch 1, wobei die Kurve des oberen Abschnitts (113-4) eine Form aufweist, die einen Abschnitt eines Ovals bildet.

6. Vorrichtung nach Anspruch 1, wobei ein oberer Punkt (113-3), der der höchste Punkt des oberen Abschnitts (113-2) ist, auf einer Mittellinie (L) angeordnet ist, die eine virtuelle gerade Linie ist, die eine Mitte des Säulenabschnitts (113-1) schneidet.

7. Vorrichtung nach Anspruch 6, wobei der obere Abschnitt (113-2) eine horizontal symmetrische Form bezüglich der Mittellinie (L) aufweist.

8. Vorrichtung nach Anspruch 1, wobei eine Querschnittsform des oberen Abschnitts (113-2) in einer Längsrichtung (Y) des Brückenteils (113) gleichförmig ist.

9. Pouch (10) einer Sekundärbatterie (1), wobei der Pouch (10) umfasst:
einen Schalenteil des Pouch (15), der mit zwei linken und rechten Schalenteilen (11, 12) versehen ist; und
einen Umfangsteil des Pouch (14), der sich von einem oberen Ende von jedem des linken Schalenteils (11) und des rechten Schalenteils (12) nach außen erstreckt; und
eine Pouchbrücke (13; 213), die konfiguriert ist, um den linken Schalenteil (11) mit dem rechten Schalenteil (12) zu verbinden,
wobei das Brückenteil (113) eine Pouchsäule (213-1) umfasst, deren laterale Seiten als zwei gerade Linien ausgebildet sind, und eine Pouchoberseite (213-2), die als eine Kurve an einem oberen Ende der Pouchsäule (213-1) ausgebildet ist, basierend auf einer Querschnittsansicht, wobei der Pouch **dadurch gekennzeichnet ist, dass**
eine Höhe (h) der Pouchoberseite (213-2), die an einem oberen Ende der Pouchsäule (213-1) gemessen wird, kleiner als 1/2 einer Breite (W) der Pouchsäule (213-1) ist.

10. Pouch (10) nach Anspruch 9, wobei die Höhe (h) der Pouchoberseite (213-2), die an dem oberen Ende der Pouchsäule (213-1) gemessen wird, größer als 1/10 der Breite (W) der Pouchsäule (213-1) ist.

## Revendications

1. Appareil (100) pour la fabrication d'une pochette (10) de batterie secondaire (1),
l'appareil comprenant :
une matrice inférieure (110) comportant une rainure de réception pour mouler une partie de coupelle de la pochette (15) dans une surface de base (114), sur laquelle la pochette (10) est disposée ;
un poinçon (150) inséré dans la rainure de réception de la matrice inférieure (110) pour mouler la partie de coupelle de la pochette (15) ; et
un outil de dénudage (130) agencé pour appuyer sur un composant périphérique de la pochette (14), qui est disposé autour d'une partie à mouler, en tant que partie de coupelle de la pochette (15), par le poinçon (150),
deux rainures de réception dotées d'une rainure de réception gauche (111) et d'une rainure de réception droite (112) étant formées dans la matrice inférieure (110),
une pièce en pont (113), configurée pour relier l'une à l'autre les deux rainures de réception, étant formée entre la rainure de réception gauche (111) et la rainure de réception droite (112),
la pièce en pont (113) comprenant une partie de montant (113-1), des côtés latéraux de laquelle ayant la forme de deux lignes droites, et une partie supérieure (113-2) formée comme une courbe sur une extrémité supérieure de la partie de montant (113-1), d'après une vue transversale,
l'appareil étant **caractérisé en ce que**
une hauteur (h) de la partie supérieure (113-2), qui se mesure sur une extrémité supérieure de la partie de montant (113-1), étant inférieure à 1/2 d'une largeur (W) de la partie de montant (113-1).

2. Appareil selon la revendication 1, la hauteur (h) de la partie supérieure (113-2), qui se mesure à l'extrémité supérieure de la partie de montant (113-1), étant supérieure à 1/10 de la largeur (W) de la partie de montant (113-1).

3. Appareil selon la revendication 2, la largeur (W) de la partie de montant (113-1) étant comprise entre 0,9 mm et 1,1 mm, et
la hauteur (h) de la partie supérieure (113-2) étant comprise entre 0,09 mm et 0,55 mm.

4. Appareil selon la revendication 2, la largeur (W) de la partie de montant (113-1) étant comprise entre 0,9 mm et 1,1 mm, et
la hauteur (h) de la partie supérieure (113-2) étant comprise entre 0,2 mm et 0,4 mm.

5. Appareil selon la revendication 1, la forme de la courbe de la partie supérieure (113-4) formant une partie d'un ovale.

6. Appareil selon la revendication 1, un point supérieur (113-3), étant le point le plus élevé de la partie supérieure (113-2), étant disposé sur un axe (L), qui est une ligne droite virtuelle traversant un centre de la partie de montant (113-1).

7. Appareil selon la revendication 6, la partie supérieure (113-2) ayant une forme horizontalement symétrique relativement à l'axe (L).

8. Appareil selon la revendication 1, une forme transversale de la partie supérieure (113-2) étant uniforme dans une direction longitudinale (Y) de la pièce en pont (113).

9. Pochette (10) d'une batterie secondaire (1), la pochette (10) comprenant :
une partie de coupelle de la pochette (15), munie de deux parties de coupelle côtés gauche et droit (11, 12) ; et
un composant périphérique de la pochette (14), s'étendant vers l'extérieur depuis une extrémité supérieure de chacune de la partie de coupelle côté gauche (11) et de la partie de coupelle côté droit (12) ; et
un pont de pochette (13 ; 213) configuré pour relier la partie de coupelle côté gauche (11) à la partie de coupelle côté droit (12),
la pièce en pont (113) comprenant un montant de pochette (213-1), des côtés latéraux duquel ayant la forme de deux lignes droites, et un dessus de pochette (213-2) ayant la forme d'une courbe sur une extrémité supérieure du montant de pochette (213-1), d'après une vue transversale,
la pochette étant **caractérisée en ce que**
une hauteur (h) du dessus de la pochette (213-2), mesurée sur une extrémité supérieure du montant de la pochette (213-1), étant inférieure à 1/2 d'une largeur (W) du montant de la pochette (213-1).

10. Pochette (10) selon la revendication 9, la hauteur (h) du dessus de la pochette (213-2), mesurée sur l'extrémité supérieure du montant de la pochette (213-1), étant supérieure à 1/10 de la largeur (W) du montant de la pochette (213-1).
